# EUROPÄISCHE PATENTSCHRIFT

(11) **EP 0 788 038 B1**
(45) Veröffentlichungstag und Bekanntmachung des Hinweises auf die Patenterteilung: **16.07.2003**
(21) Anmeldenummer: 97101025.1
(22) Anmeldetag: 23.01.1997
(51) Int. Cl.: G05B 19/042

(54) **Verfahren zur Speicherung von Prozesssignalen einer technischen Anlage**
Method of memorising process signals from a technical installation
Méthode de mémorisation des signaux d'un processus dans une installation technique

(30) Priorität: 05.02.1996 DE 19604022
(43) Veröffentlichungstag der Anmeldung: 06.08.1997
(73) Patentinhaber: SIEMENS AKTIENGESELLSCHAFT, 80333 München (DE)
(72) Erfinder: Bögge, Michael, Dipl.-Ing., 91080 Spardorf (DE); Dörigmann, Udo, Dipl.-Ing., 63165 Mülheim (DE); Hell, Wolfgang, 90552 Röthenberg (DE)

(56) Entgegenhaltungen:
- EP-A- 0 514 104
- DE-C- 19 510 539

## Beschreibung

Die Erfindung bezieht sich auf ein Verfahren zur Speicherung von Prozeßsignalen einer technischen Anlage, bei dem, insbesondere in einem sogenannten Ringspeicher, eine Vielzahl von verschiedenartigen Prozeßsignaltypen zugeordneten Prozeßsignalen in chronologischer Reihenfolge als Meldeelemente hinterlegt werden. Unter technischer Anlage wird hierbei insbesondere eine großtechnische Anlage, z. B. eine Kraftwerksanlage, verstanden.

In einer Kraftwerksanlage sollen Überwachungs- und Informationssysteme die aktuellen Betriebszustände der Anlage erkennbar machen und Abweichungen von einem Sollzustand melden sowie Diagnosen des Anlagenverhaltens ermöglichen. Dazu ist eine umfangreiche Erfassung und Speicherung von die Betriebszustände aller Anlagenteile charakterisierenden Meßwerten erforderlich. Mit zunehmender Energie- und/oder Arbeitsausnutzung derartiger Anlagen wachsen auch die Anforderungen an das Leitsystem hinsichtlich der Verarbeitung und Speicherung großer Datenmengen.

Die Speicherung der Daten ist dabei insbesondere für die Diagnosezwecke des Anlagenverhaltens von Bedeutung. Dazu erfolgt die Speicherung von zeitlichen Prozeßabläufen üblicherweise durch chronologische Hinterlegung von aus Meßwerten und/oder Anlagenzuständen abgeleiteten Prozeßsignalen als Meldeelemente. Die jeweils einen Meßwert und/oder einen Anlagenzustand repräsentierenden Prozeßsignale sind dabei verschiedenen Prozeßsignaltypen zugeordnet. Jeder Prozeßsignal typ kann dabei insbesondere ein Meßwert, wie zum Beispiel die Eintrittstemperatur einer Turbine, ein Zustand eines Anlagenteils, wie zum Beispiel Pumpe AN/AUS, oder ein Organisationselement innerhalb einer Datenverarbeitung sein.
Für eine Diagnose kann anhand der gespeicherten Daten die zeitliche Entwicklung eines beliebigen Prozeßsignaltyps analysiert werden. Dazu wird üblicherweise der die in chronologischer Reihenfolge abgespeicherten Meldeelemente enthaltende Speicher ausgehend von der aktuellen Zeitposition oder ausgehend von einer vorgebbaren Zeitposition sequentiell durchsucht. Jedes dabei aufgefundene Prozeßsignal des zu analysierenden Prozeßsignaltyps wird ausgelesen und steht somit für eine Auswertung oder Analyse zur Verfügung. Insbesondere bei einem Datenspeicher mit großen Datenmengen ist ein derartiges sequentielles Durchsuchen jedoch sehr zeitaufwendig. Eine Diagnose, die von der Auswertung zeitlich lange zurückliegender Ereignisse im Anlagenprozeß abhängt, kann somit in nachteiliger Weise bis zu einigen Stunden dauern.

In der EP-AB-958551 (=Dokument nach Art. 54(3) EPÜ) ist ein Verfahren zur Speicherung von Prozeßsignalen einer technischen Anlage offenbart, wobei jeweils eine charakteristische Kennung für jedes Prozeßsignal Aufschluß darüber gibt, an welcher absoluten Speicherposition das vorhergehende Prozeßsignal gleichen Prozeßsignaltyps abgelegt ist.

Diese Art der charakteristischen Kennung ist u.a. wegen ihres Bezugs auf eine absolute Speicheradresse fehleranfällig und wenig flexibel, da beispielsweise nach einer internen Speicherumorganisation sämtliche Bezüge auf absolute Adressen nicht mehr korrekt sind.

Der Erfindung liegt daher die Aufgabe zugrunde, ein Verfahren zur Speicherung von Prozeßsignalen einer technischen Anlage anzugeben, das ein schnelles Auffinden von zeitlich geordneten Prozeßsignalen eines vorgebbaren Prozeßsignaltyps ermöglicht.

Diese Aufgabe wird für ein Verfahren der obengenannten Art erfindungsgemäß gelöst, indem jedem Meldeelement bei seiner Hinterlegung zusätzlich zu einem das zugrundeliegende Prozeßsignal charakterisierenden Datencode ein Adressierungscode zugeordnet wird, der die Adressendistanz zwischen dem aktuell zu hinterlegenden Meldeelement und demjenigen Meldeelement charakterisiert, das das in der chronologischen Reihenfolge vorhergehende und dem gleichen Prozeßsignaltyp zugeordnete Prozeßsignal repräsentiert.

Die Erfindung geht dabei von der Überlegung aus, daß insbesondere eine Analyse irrelevanter Informationen ein Auffinden von zeitlich geordneten Prozeßsignalen eines vorgebbaren Prozeßsignaltyps verlangsamt; gerade beim sequentiellen Lesen eines Datenspeichers wird aber eine Vielzahl von irrelevanten Informationen analysiert. Das sequentielle Lesen kann vermieden und das Auffinden der Prozeßsignale somit beschleunigt werden, indem die die Prozeßsignale repräsentierenden Meldeelemente bereits bei ihrer Abspeicherung in geeigneter Weise miteinander verkettet werden.

Um für eine Diagnose die zeitliche Entwicklung eines Prozeßsignaltyps in besonders zuverlässiger Weise zu hinterlegen, umfaßt zweckmäßigerweise jedes Meldeelement einen den Zeitpunkt der Erfassung des zugrundeliegenden Prozeßsignals charakterisierenden Zeitcode.

Um auch besonders große Datenmengen strukturiert abspeichern zu können, wird vorteilhafterweise eine Anzahl von Meldeelementen zu einem Archiv zusammengefaßt hinterlegt. Für eine dauerhafte Archivierung kann dann beispielsweise jedes Archiv separat auf einen dafür vorgesehenen Datenträger, beispielsweise auf eine Diskette, auf eine CD-ROM oder auf einen magneto-optischen Datenträger, gespeichert werden.

Um eine Diagnose für einen vorgebbaren vergangenen Zeitraum in besonders einfacher Weise zu ermöglichen, werden in vorteilhafter Ausgestaltung für jedes Archiv ein den Zeitpunkt der Erfassung des dem in der chronologischen Reihenfolge zuerst hinterlegten Meldeelement zugrundeliegenden Prozeßsignals charakterisierender Zeitcode als Anfangszeitcode und ein den Zeitpunkt der Erfassung des dem in der chronologischen Reihenfolge zuletzt hinterlegten Meldeelement zugrundeliegenden Prozeßsignals charakterisierender Zeitcode als Endzeitcode in einer Verwaltungsdatei hinterlegt.

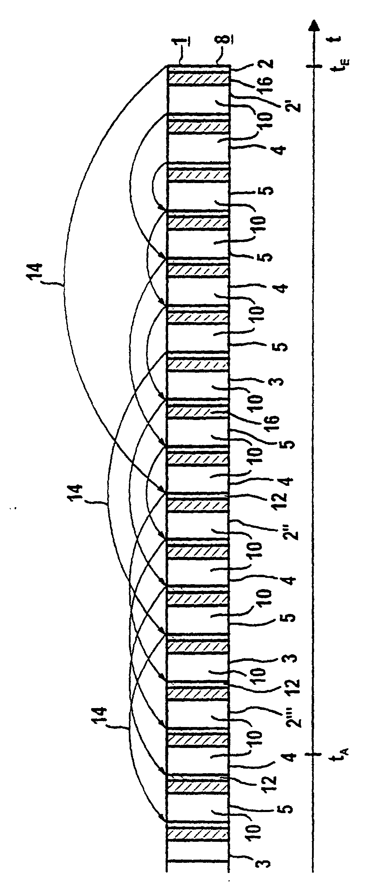

Ein Ausführungsbeispiel der Erfindung wird anhand einer Zeichnung näher erläutert. Darin zeigt die Figur ein Belegungsschema von zu einem Archiv zusammengefaßten Meldeelementen.

Im Belegungsschema 1 gemäß der Figur ist eine Vielzahl von Prozeßsignalen aus dem Anlagenprozeß einer Kraftwerksanlage als Meldeelemente 2, 3, 4, 5 - wie durch den Zeitpfeil t angedeutet - in chronologischer Reihenfolge abgespeichert und zu einem Archiv 8 zusammengefaßt. Die den Meldeelementen 2, 3, 4, 5 zugrundeliegenden Prozeßsignale sind dabei verschiedenen Prozeßsignaltypen zugeordnet, wobei jedes einem Meldeelement 2 zugrundeliegende Prozeßsignal einem gemeinsamen Prozeßsignaltyp zugeordnet ist. Analoges gilt für die den Meldeelementen 3, 4 und 5 zugrundeliegenden Prozeßsignale. Jeder Prozeßsignaltyp kann dabei insbesondere ein Meßwert, wie zum Beispiel die Eintrittstemperatur einer Turbine, ein Zustand eines Anlagenteils, wie zum Beispiel Pumpe AN/AUS, oder ein Organisationselement innerhalb einer Datenverarbeitung sein.

Jedes Meldeelement 2 bis 5 umfaßt einen Datencode 10, der die numerische Größe eines Meßwertes bzw. die Statusangabe eines Zustandes angibt und somit das dem jeweiligen Meldeelement 2 bis 5 zugrundeliegende Prozeßsignal charakterisiert. Zusätzlich umfaßt jedes Meldeelement 2 einen Adressierungscode 12, der die Adressendistanz zwischen dem jeweiligen Meldeelement 2 und dem das vorhergehende und dem gleichen Prozeßsignaltyp zugeordnete Prozeßsignal repräsentierenden Meldeelement 2 innerhalb der chronologischen Reihenfolge der Meldeelemente 2 bis 5 charakterisiert. Analoges gilt für die den Meldeelementen 3, 4 und 5 zugrundeliegenden Prozeßsignale. Eine derartige Verkettung der Meldeelemente 2 bis 5 ist durch die Pfeile 14 angedeutet.

Die Adressendistanz zwischen zwei Meldeelementen 2 bis 5 ist dabei ermittelbar, da alle Informationselemente in fortlaufend numerierten Speicherplätzen hinterlegt sind. Beispielsweise errechnet sich die Adressendistanz zwischen einem ersten Meldeelement 2', das im Speicherplatz "195" hinterlegt ist, und einem zweiten Meldeelement 2'', das im Speicherplatz "135" hinterlegt ist, zu "60". Der Adressierungscode 12 des Meldeelements 2' verweist also auf die Position des vorhergehenden und zum gleichen Prozeßsignaltyp gehörenden Meldeelements 2'' durch Angabe der Adressendistanz "60".

Jedes Meldeelement 2 bis 5 umfaßt weiterhin einen Zeitcode 16, der den Zeitpunkt der Erfassung des dem Meldeelement 2 bis 5 zugrundeliegenden Prozeßsignals charakterisiert.

Die Meldeelemente 2 bis 5 sind zu einem Archiv 8 zusammengefaßt. Die in einem der Archive 8 zusammengefaßten Daten können für eine dauerhafte Archivierung auf einem speziell für dieses Archiv 8 vorgesehenen Datenträger, wie beispielsweise eine separate Diskette, ein CD-ROM oder einen magneto-optischen Datenträger, gespeichert sein.

Für das in der Figur gezeigte Archiv 8 sind ein den Zeitpunkt t_{A} der Erfassung des dem in der chronologischen Reihenfolge zuerst hinterlegten Meldeelement 3 zugrundeliegenden Prozeßsignals charakterisierender Zeitcode als Anfangszeitcode in einer - nicht dargestellten - Verwaltungsdatei hinterlegt. Ebenso ist dort und ein den Zeitpunkt t_{E} der Erfassung des dem in der chronologischen Reihenfolge zuletzt hinterlegten Meldeelement 2' zugrundeliegenden Prozeßsignals charakterisierender Zeitcode als Endzeitcode hinterlegt.

Für eine Diagnose kann es erforderlich sein, die zeitliche Entwicklung eines Prozeßsignaltyps, beispielsweise der durch die Meldeelemente 2 repräsentierten Eintrittstemperatur einer Turbine, während eines vorgebbaren Zeitintervalls zu analysieren. Dazu wird zunächst anhand der in der Verwaltungsdatei hinterlegten Anfangs- und Endzeitcodes aller Archive 8 ermittelt, in welchem Archiv 8 oder in welchen Archiven 8 die im ausgewählten Zeitraum erfaßten Prozeßsignale gespeichert sind.

Das so ermittelte Archiv 8 wird dann weiter ausgewertet, indem das dem Endzeitcode 20 des Archivs 8 nächstliegende Meldeelement 2' durch sequentielle Analyse aller dazwischenliegenden Meldeelemente 3 bis 5 ermittelt wird. Anhand des Zeitcodes 16 des Meldeelements 2' wird sodann festgestellt, ob das dem Meldeelement 2' zugrundeliegende Prozeßsignal innerhalb des ausgewählten Zeitraumes erfaßt wurde. Ist dies nicht der Fall, so kann anhand des Adressierungscodes 12 des Meldeelements 2' direkt zum diesem vorhergehenden und den gleichen Prozeßsignaltyp repräsentierenden Meldeelement 2'' gesprungen werden. Dieses wird nun anhand seines Zeitcodes 16 ebenfalls dahingehend überprüft, ob das ihm zugrundeliegende Prozeßsignal innerhalb des ausgewählten Zeitraumes erfaßt wurde. Dies wird solange wiederholt, bis das erste Meldeelement 2 aufgefunden wurde, dessen ihm zugrundeliegendes Prozeßsignal innerhalb des ausgewählten Zeitraumes erfaßt wurde.

Ausgehend von dem so ermittelten Meldeelement 2 werden nun anhand der jeweiligen Adressierungscodes 12 und der jeweiligen Zeitcodes 16 solange alle vorausgehenden Meldeelemente 2 - wie durch die Pfeile 14 angedeutet - in direkter Verkettung ausgelesen, bis der Zeitcode 16 eines Meldeelements 2 angibt, daß das diesem zugrundeliegende Prozeßsignal außerhalb des ausgewählten Zeitraumes erfaßt wurde.

Durch eine derartige Hinterlegung der Meldeelemente 2 bis 5, bei der solche Meldeelemente 2 bis 5 durch ihre Adressierungscodes 12 miteinander verkettet sind, deren zugrundeliegende Prozeßsignale vom gleichen Prozeßsignaltyp sind, wird das Auffinden einzelner Meldeelemente 2 bis 5 oder aus diesen gebildeter Gruppen vereinfacht und beschleunigt. Ein sequentielles Lesen des gesamten Inhalts des Datenspeichers ist somit nicht erforderlich.

## Patentansprüche

1. Verfahren zur Speicherung von Prozeßsignalen einer technischen Anlage, bei dem eine Vielzahl von verschiedenartigen Prozeßsignaltypen zugeordneten Prozeßsignalen in chronologischer Reihenfolge als Meldeelemente (2 bis 5) hinterlegt werden, wobei jedem Meldeelement (2 bis 5) zusätzlich zu einem das zugrundeliegende Prozeßsignal charakterisierenden Datencode (10) ein Adressierungscode (12) zugeordnet wird, der die Adressendistanz zwischen dem aktuell zu hinterlegenden Meldeelement (2 bis 5) und demjenigen Meldeelement (2 bis 5) charakterisiert, das innerhalb der chronologischen Reihenfolge vorhergehende und dem gleichen Prozeßsignaltyp zugeordnete Prozeßsignal repräsentiert.

2. Verfahren nach Anspruch 1,
wobei jedem Meldeelement (2 bis 5) ein den Zeitpunkt der Erfassung des zugrundeliegenden Prozeßsignals charakterisierender Zeitcode (16) zugeordnet ist.

3. Verfahren nach Anspruch 1 oder 2,
wobei eine Anzahl von Meldeelementen (2 bis 5) zu einem Archiv (8) zusammengefaßt hinterlegt wird.

4. Verfahren nach Anspruch 3,
wobei für jedes Archiv (8) innerhalb einer Verwaltungsdatei ein den Zeitpunkt (t_{A}) der Erfassung des zuerst hinterlegten Meldeelement (2 bis 5) zugrundeliegenden Prozeßsignals charakterisierender Anfangszeitcode und ein den Zeitpunkt (t_{E}) der Erfassung des dem zuletzt hinterlegten Meldeelement (2 bis 5) zugrundeliegenden Prozeßsignals charakterisierender Endzeitcode hinterlegt werden.

## Claims

1. Method for saving process signals from a technical installation, in which method a number of process signals assigned to different process signal types are stored in chronological order as signaling elements (2 to 5), each signaling element (2 to 5) being assigned an addressing code (12) in addition to a data code (10) characterizing the underlying process signal, this addressing code (12) characterizing the address distance between the signaling element (2 to 5) currently to be stored and the signaling element (2 to 5) representing the process signal preceding it in chronological order and assigned to the same process signal type.

2. Method according to Claim 1, wherein a time code (16) characterizing the time of recording of the underlying process signal is assigned to each signaling element (2 to 5).

3. Method according to Claim 1 or 2, wherein a number of signaling elements (2 to 5) are stored grouped as an archive (8).

4. Method according to Claim 3, wherein for each archive (8) within an administration file a start time code characterizing the time (t_{A}) of recording of the process signal underlying the first stored signaling element (2 to 5) and an end time code characterizing the time (t_{E}) of recording of the process signal underlying the last stored signaling element (2 to 5) are stored.

## Revendications

1. Procédé de mémorisation de signaux de processus d'une installation technique, dans lequel on enregistre dans l'ordre chronologique comme éléments de signalisation (2 à 5) de nombreux signaux de processus associés à des types de signaux de processus différents, dans lequel on associe à chaque élément de signalisation (2 à 5), en plus d'un code de données (10) caractérisant le signal de processus à la base de l'élément de signalisation, un code d'adressage (12) qui caractérise l'écart d'adresse entre l'élément de signalisation (2 à 5) actuellement à enregistrer et l'élément de signalisation (2 à 5) qui représente le signal de processus précédent dans l'ordre chronologique et associé au même type de signal de processus.

2. Procédé selon la revendication 1,
dans lequel un code temporel (16) caractérisant l'instant de l'acquisition du signal de processus à la base de l'élément de signalisation est associé à chaque élément de signalisation (2 à 5).

3. Procédé selon la revendication 1 ou 2,
dans lequel on enregistre un certain nombre d'éléments de signalisation (2 à 5) regroupés en une archive (8).

4. Procédé selon la revendication 3,
dans lequel on enregistre pour chaque archive (8) à l'intérieur d'un fichier de gestion un code temporel de début caractérisant l'instant (t_{A}) de l'acquisition du signal de processus à la base de l'élément de signalisation (2 à 5) enregistré en premier et un code temporel de fin caractérisant l'instant (t_{E}) de l'acquisition du signal de processus à la base de l'élément de signalisation (2 à 5) enregistré en dernier.
